# FASCICULE DE BREVET EUROPEEN

(11) **EP 0 795 271 B1**
(45) Date de publication et mention de la délivrance du brevet: **28.05.2003**
(21) Numéro de dépôt: 97430008.9
(22) Date de dépôt: 27.02.1997
(51) Int. Cl.: A23B 4/30, A23B 4/023, A23B 4/12, A23B 4/20

(54) **Procédé et dispositif de déshydratation et/ou d'imprégnation de produits alimentaires par douchage**
Verfahren und Vorrichtung zur Entwasserung und/oder Imprägnierung von Nahrungsmitteln mittels Duschen
Process and apparatus for dehydrating and/or impregnating food products by showering

(30) Priorité: 15.03.1996 FR 9603471
(43) Date de publication de la demande: 17.09.1997
(73) Titulaire: CENTRE DE COOPERATION INTERNATIONALE EN RECHERCHE AGRONOMIQUE POUR LE DEVELOPPEMENT (CIRAD), 34090 Montpellier Cédex 1 (FR)
(72) Inventeur: Marouze, Claude, 34980 Saint-Gely du Fesc (FR); Mens, Frédéric, 34000 Montpellier (FR); Rivier, Michel, 34980 Montferrier (FR); Collignan, Antoine, 34730 Prades-Le-Lez (FR)
(74) Mandataire: Domange, Maxime

(56) Documents cités:
- EP-A- 0 587 515
- WO-A-83/03522
- WO-A-89/11224
- DE-A- 2 164 870
- DE-A- 2 528 740
- PATENT ABSTRACTS OF JAPAN vol. 95, no. 4, 31 Mai 1995 & JP 07 000095 A (SUISHIYOU:KK), 6 Janvier 1995,
- PATENT ABSTRACTS OF JAPAN vol. 9, no. 32 (C-265), 9 Février 1985 & JP 59 179054 A (TATSUROU FUKUMOTO), 11 Octobre 1984,

## Description

La présente invention est relative à un procédé de traitement de produits alimentaires et à un dispositif permettant la mise en oeuvre de ce procédé.

Le domaine technique de l'invention est celui de l'industrie du traitement des produits alimentaires carnés.

L'invention concerne le traitement de produits carnés tels que filets de viande, filets de poissons ou poissons entiers, crustacés, mollusques.

Les traitements de produits visés sont la déshydratation et/ou imprégnation (formulation de produits) tels que salage, salage/séchage, séchage, imprégnation par divers solutés (sels, sucres, acides, arômes...) à des fins organoleptiques, nutritionnelles, ou de conservation (exemple : marinage).

Ces traitements visent à produire des produits carnés semi-élaborés ou finis tels que produits salés/séchés, produits marinés, produits salés/séchés/aromatisés.

Le brevet FR 9208958 (CIRAD-SAR et IFREMER) décrit un procédé et un dispositif de salage-séchage et de fumage à froid de produits alimentaires carnés ; selon le procédé décrit dans ce document, on traite les produits alimentaires carnés par une opération de séchage/imprégnation pour permettre simultanément le salage et le séchage des produits, en les mettant au contact d'un mélange de chlorure de sodium et de sucre ; ce document propose deux variantes de réalisation du procédé : dans une première variante, pour l'opération de salage-séchage, on met les produits au contact d'un mélange cristallisé de sucre et de chlorure de sodium, c'est-à-dire à sec ; dans une deuxième variante de réalisation, pour l'opération de salage-séchage, on immerge les produits dans une solution acqueuse de chlorure de sodium et de sucre contenue dans un bac.

La première variante de réalisation du procédé décrite ci-dessus est difficile à mécaniser et à automatiser ; par conséquent, ce procédé nécessite soit une intervention manuelle importante engendrant des coûts de production et des temps de traitement élevés, soit nécessite la mise en oeuvre d'une installation complexe et coûteuse.

La deuxième variante consistant à immerger les produits dans une solution acqueuse présente en outre l'inconvénient de nécessiter l'emploi d'un grand volume de solution acqueuse dont le coût est élevé.

L'objet de l'invention est de proposer une méthode de traitement de produits alimentaires, notamment carnés, qui soit plus facile à mettre en oeuvre, qui soit facilement automatisable et nécessite des installations très simples.

On connaît par le brevet EP 414 734 un procédé et un dispositif de traitement de produits alimentaires qui sont déposés sur une tôle perforée située au fond d'un récipient équipé d'un couvercle ; les produits sont empilés dans le récipient et le liquide de traitement est pulvérisé au-dessus des produits, par un dispositif fixé au couvercle, en traversant une tôle perforée de répartition qui est fixée au couvercle : ce procédé de traitement en vrac est inadapté aux produits fragiles ; en outre, l'introduction des produits dans le récipient ainsi que l'extraction des produits hors du récipient est difficile à automatiser.

La présente invention a notamment pour objet de procurer un procédé et un dispositif de traitement de produits alimentaires carnés notamment, qui permettent d'obtenir leur déshydratation et/ou leur imprégnation, de manière homogène et améliorée et qui permettent un éventuel traitement ultérieur de fumage des produits ; un objet de l'invention est en outre de permettre la formulation de produits notamment pour l'obtention de produits marinés.

L'abrégé du brevet JP-A-59179054 décrit un appareil de décongélation d'aliments congelés par aspersion d'eau chaude qui comporte :
- des conteneurs empilés qui comportent un plateau perforé recevant les aliments ;
- une chambre de collecte de l'eau ;
- un circuit de recyclage de l'eau aspirée dans la chambre, qui comporte une pompe et un filtre.

La demande de brevet EP-A-587 515 décrit un procédé et un dispositif de traitement de produits alimentaires carnés par immersion des produits dans une solution aqueuse de chlorure de sodium et de sucre, les produits étant disposés sur des plateaux perforés superposés.

La demande internationale WO-89/11224 décrit un autre dispositif d'imprégnation d'aliments par aspersion d'une solution sur les aliments empilés dans un conteneur fermé à la base duquel la solution est aspirée pour son recyclage par une pompe.

La solution au problème posé consiste à procurer un procédé de traitement de produits alimentaires, particulièrement de produits carnés tels que les pièces ou filets de viande ou poissons, par mise en contact des produits avec une solution acqueuse contenant du sucre et/ou du sel, et/ou un ou plusieurs acide(s), et/ou d'autres solutés pour saler, sécher (déshydrater) et/ou pour formuler (imprégner) lesdits produits, dans lequel :
- on dispose les produits alimentaires sur des supports ou plateaux perforés (ou ajourés) ou sur des clayettes qui sont empilé(e)s,
- on asperge ou on douche lesdits produits, par exemple de manière sensiblement homogène sur toute la surface desdits plateaux ou clayettes, par un fort débit de ladite solution acqueuse pour maintenir en permanence une quantité de solution suffisante autour du produit pour le saler, le sécher, l'aromatiser, ce qui permet de retrouver un comportement du produit identique ou similaire à celui qu'il aurait s'il était immergé et agité,
- on collecte ou on récupère sous la pile de plateaux ou clayettes, ladite solution acqueuse aspergée et résultant du ruissellement (et après son ruissellement) sur les produits disposés sur les plateaux,
- on recycle ladite solution acqueuse, c'est-à-dire on la réutilise pour asperger lesdits produits, et on la régénère, par exemple par filtration et ajustement des concentrations de solutés, procédé caractérisé en ce que ladite solution aqueuse contient un (ou des) soluté(s) tel(s) que du sucre et/ou du sel et/ou un ou plusieurs acide(s), dont on ajuste la concentration, en ce que lesdits supports perforés comportent une structure perforée ondulée recevant lesdits produits.

Selon des modes préférentiels de mise en oeuvre du procédé selon l'invention :
- on dispose les produits à plat et en une seule couche sur les plateaux ;
- on dispose les plateaux empilés sur un convoyeur de transfert, tel qu'un convoyeur linéaire à bande, d'axe longitudinal horizontal ;
- on utilise des claies ou clayettes ondulées empilées, dont les ondulations sont alignées verticalement pour permettre le recentrage du flux de la solution d'une claie à l'autre, ce qui favorise encore un traitement homogène des produits disposés sur des claies empilées ;
- on maintient ladite solution acqueuse à une température inférieure ou égale à 20°C, de préférence supérieure ou égale à 5°C, par exemple voisine de 5 à 15°C,
- on douche lesdits produits alimentaires pendant une durée inférieure ou égale à dix heures, par exemple voisine de quelques dizaines de minutes à trois heures,
- on maintient ou on fixe le rapport du débit volumique aspergé (de ladite solution acqueuse) à la surface horizontale des plateaux (c'est-à-dire transversale par référence à la direction du flux d'aspersion de ladite solution acqueuse sur lesdits produits) dans une plage allant de 1 à 50 m³ par heure et par m² (homogène à des mètres par heure) et de préférence on maintient ledit rapport dans une plage allant de 10 à 25 m³ par heure et par m²,
- on choisit et on maintient un débit de douchage des produits par ladite solution dont le rapport à la masse des produits traités est compris entre 25 et 1500 litres par heure et par kilo, et de préférence compris entre 40 et 900 litres par heure et par kilo, par exemple voisin de 100 à 400 litres par heure et par kilo.
- on utilise une solution acqueuse dont la concentration en chlorure de sodium est supérieure ou égale à 50 g de sel par litre d'eau, par exemple voisine de 100 à 350 g par litre,
- on utilise une solution acqueuse dont la concentration en acide est comprise entre 20 gramme par litre d'eau et 200 grammes par litre d'eau par exemple voisine de 40 à 80 grammes par litre,
- on utilise une solution acqueuse dans laquelle la concentration du sucre ou du sirop de sucre est supérieure ou égale à 50 g de sucre ou de sirop de sucre par litre d'eau, par exemple voisine de 100 à 500 g par litre,
- on fait circuler dans l'installation de traitement, un volume de ladite solution acqueuse dont le rapport à la masse de produits alimentaires traités est inférieure ou égale à 50 litres par kilo, de préférence au moins égal à un litre par kilo, et inférieur ou égal à 10 litres par kilo.

L'invention procure également un dispositif de traitement de produits alimentaires carnés par aspersion ou douchage des produits par une solution acqueuse contenant du sucre et/ou du sel, et/ou un acide qui comporte :
- plusieurs supports tels que des plateaux perforés ou clayettes, superposés (de préférence identiques),
- des moyens d'aspersion desdits produits disposés sur lesdits plateaux, de manière sensiblement homogène sur toute la surface desdits plateaux,
- des moyens de collecte de ladite solution acqueuse ayant ruisselé sur lesdits produits et au travers desdits plateaux,
- des moyens de recyclage de ladite solution acqueuse pour sa réutilisation pour l'aspersion des produits caractérisé en ce que les moyens de recyclage permettent d'ajuster la concentration du ou des soluté(s) contenu(s) dans la solution aqueuse, et en ce que lesdits supports perforés comportent une structure perforée ondulée recevant lesdits produits.

Selon des modes préférentiels de mise en oeuvre du dispositif, selon l'invention
- le dispositif comporte en outre des moyens de refroidissement et de maintient de la température de ladite solution acqueuse à une température inférieure ou égale à 20°C, et comporte de préférence des moyens de déplacement (selon de préférence une direction horizontale), d'une ou plusieurs piles desdits plateaux, sous une zone de douchage (ou pulvérisation) comportant une pluralité d'orifices ou buses de projection du liquide de traitement,
- Lesdits plateaux ou clayettes comportent une structure de support des produits qui est de forme ondulée, et définit ainsi des réceptacles ou logements en forme de gouttières d'axe horizontal, parallèles les unes aux autres qui facilitent le traitement de produits allongés tels que des filets ; de préférence le rapport du pas longitudinal
ou transversal des ondulations du support de produits à la hauteur ou profondeur desdites ondulations est supérieur à un, par exemple voisin de deux à cinq, et lesdites ondulations ont par exemple un profil en forme d'arc de cercle ;
- Lesdits plateaux qui sont identiques comportent chacun un treillis ou grillage de fil métallique dont le diamètre est de préférence compris entre 0,1 mm et 5 mm et qui forme des ondulations en forme de canaux parallèles constituant des logements aptes à recevoir lesdits produits ;
- Les mailles dudit treillis ou grillage ont une plus grande dimension comprise entre 5 mm et 5 cm ;
- La hauteur desdits plateaux correspondant à la distance (ou au pas) d'empilement de ceux-ci, est inférieure ou égale à 10 cm, et de préférence ladite hauteur est telle que son rapport à la hauteur desdites ondulations de la partie du plateau formant support des produits est inférieur à 3 ;
- Lesdits plateaux ou clayettes comportent une ossature métallique de forme carrée ou rectangulaire dont la surface est inférieure ou égale à 1 m² ;
- le dispositif comporte de préférence un convoyeur linéaire de préférence sensiblement horizontal, un bac de distribution de la solution acqueuse qui s'étend sur une partie substantielle de la longueur dudit convoyeur, un bac de récupération de la solution de ruissellement qui s'étend sous ledit convoyeur sur une partie substantielle de la longueur de celui-ci, un échangeur de chaleur où serpentin de refroidissement de ladite solution acqueuse qui est par exemple disposée à l'intérieur dudit bac de collecte ou de récupération ; le rapport de la longueur dudit convoyeur à la longueur desdits plateaux est de préférence supérieur ou égal à 3, par exemple voisine de 5 à 20 pour permettre de traiter et d'asperger plusieurs piles de plateaux qui sont juxtaposées sur ledit convoyeur le long de celui-ci. Ledit bac de distribution est le cas échéant cloisonné et/ou en partie masqué pour permettre d'affecter à chaque compartiment de ce. bac, des débits différents de solution ; alternativement, plusieurs orifices ou buses disposés le long et au-dessus du convoyeur, peuvent être alimentés par des canalisations séparées où l'on peut faire circuler des liquides de traitement de compositions différentes ; la disposition des produits en couches superposées et séparées les unes des autres (grâce à la superposition des plateaux) améliore l'homogénéité du traitement et permet de traiter des produits fragiles.

L'invention procure un procédé de traitement de produits alimentaires qui peut être très facilement mis en oeuvre industriellement, c'est-à-dire pour traiter de grandes quantités de produits alimentaires à l'aide d'une installation très simple et qui permet d'utiliser une quantité de solution acqueuse relativement faible ; grâce à la configuration particulière des plateaux perforés ou claies formant support des produits durant le traitement des produits par douchage, on obtient un traitement homogène du produit en favorisant le ruissellement de la solution acqueuse sur toutes les faces externes du produit traité ; l'invention procure un procédé qui peut être facilement mis en oeuvre de manière continue et dont l'automatisation des étapes de transfert (ou manipulation) des produits est facilitée ; le procédé et l'installation utilisent des volumes de solution acqueuse dont le rapport à la masse ou au volume des produits à traiter est relativement faible.

Grâce au fort débit de douchage de solution conforme à l'invention, on maintient une couche de solution autour du produit afin de permettre des transferts de matière entre ce produit et la solution (perte en eau et gains en solutés). Une circulation de la solution autour des produits permet de contrôler et d'optimiser ces transferts de matière.

Grâce au fait que l'on peut conformément à l'invention minimiser la quantité de solution acqueuse mise en oeuvre, on obtient d'une part un procédé dont le coût est réduit et on diminue d'autre part les problèmes écologiques et économiques nécessités par le recyclage de la solution acqueuse en tant que déchet ou résidu du traitement.

L'invention permet de traiter les produits dans des temps relativement courts qui facilitent leur mise en oeuvre et leur adaptation à des procédés (continus ou non) de traitement de produits qui peuvent comporter ultérieurement à l'opération de déshydratation et d'imprégnation, une opération de fumage des produits.

En outre, l'invention permet d'assurer que la solution acqueuse mise au contact des produits est homogène en terme dé concentration en sucre et en sel notamment, et ainsi d'assurer un traitement homogène des produits, ce qui dans le cas du traitement (connu) par immersion des produits nécessite l'agitation continue du bain dans lequel les produits sont immergés, ce qui n'est pas nécessité conformément à la présente invention.

En outre, comparativement à la méthode (connue) de traitement par immersion des produits dans un bain, la présente invention nécessite une consommation énergétique nettement moindre, la seule consommation énergétique étant celle nécessitée pour l'entraînement de la pompe de recyclage ou de recirculation de la solution acqueuse, du bac de récupération jusqu'au bac de distribution et d'aspersion ; l'invention permet également d'utiliser une installation simple du point de vue des dispositifs d'étanchéité disposés sur le circuit de circulation de la solution acqueuse ; l'installation conforme à l'invention peut être facilement conçue et fabriquée pour des installations de petites dimensions destinée à traiter de petites quantités de produit, ou bien pour des installations de très grandes dimensions.

En outre, l'invention permet, grâce particulièrement à l'utilisation d'un bac supérieur de répartition du flux de solution acqueuse aspergée sur les produits, d'adapter le débit d'aspersion, pour procurer différents débits dans différentes zones du bac afin d'adapter ce débit d'aspersion à des irrégularités (ou disparités) dans la forme ou le volume ou la masse des pièces traitées qui sont disposées sur les claies situées sous le bac d'aspersion, par l'utilisation par exemple de masques obturant une partie des orifices d'aspersion prévus dans le fond du bac d'aspersion.

On peut ainsi par exemple compartimenter le bac supérieur d'aspersion en deux demi-bacs dont les perforations seront de dimensions différentes ou de pas différents pour procurer, dans deux zones dès claies, des débits d'aspersion différents adaptés à des pièces de produits alimentaires à traiter de formes différentes par exemple ; on peut aussi alimenter des parties de bac ou des orifices par des liquides de traitement différents.

Les avantages procurés par l'invention seront mieux compris au travers de la description suivante qui se réfère aux dessins annexés, qui illustrent sans aucun caractère limitatif des modes préférentiels de réalisation de l'invention.

Sauf indications contraires, des éléments identiques ou similaires sont repérés par un même repère numérique sur les différentes figures.

La figure 1 illustre en perspective schématique, une installation de traitement de produits alimentaires conforme à l'invention, disposée en amont d'un tunnel de fumage.

La figure 2 est une vue en coupe schématique par un plan vertical transversal d'une installation conforme à la figure 1, et est sensiblement une vue selon II-II de la figure 1.

La figure 3 illustre en perspective schématique un mode préférentiel de réalisation d'un plateau support de produits entrant dans la constitution d'une installation de traitement selon l'invention.

La figure 4 est une vue frontale selon IV du plateau de la figure 3.

La figure 5 illustre un détail de réalisation d'un plateau selon l'invention et est une vue de détail selon V de la figure 4.

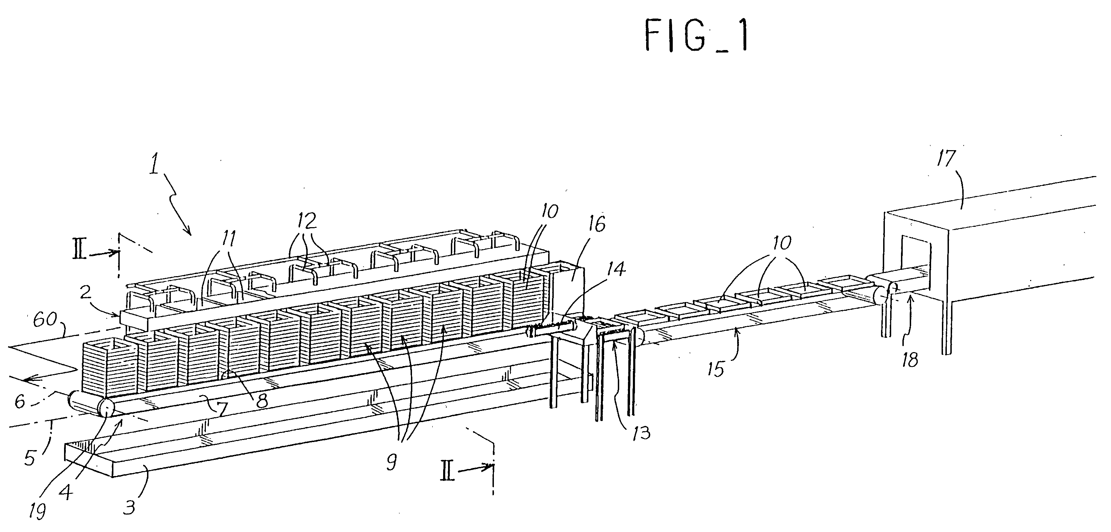

Par référence à la figure 1 particulièrement, le dispositif 1 de traitement comporte un bac 2 perforé situé en partie supérieure de l'installation de douchage des produits alimentaires.

Le bac 2 perforé peut être muni d'une pluralité de compartiments 11, séparés par des cloisons et permettant le cas échéant d'affecter pour chaque compartiment des débits d'alimentation en solution acqueuse différents et par conséquent des débits d'aspersion différents.

Sous le bac 2 perforé est prévu un convoyeur 4 à bande muni d'un brin supérieur 8 et d'un brin inférieur 9, ledit convoyeur 4 s'étendant selon un axe longitudinal 5 horizontal, étant entraîné par des rouleaux 19 d'axe de rotation 6 également horizontal et perpendiculaire à l'axe 5. Sous le convoyeur 4 est diposé un bac 3 de collecte s'étendant sur une partie substantielle de la longueur du convoyeur 4 et permettant de récupérer la solution acqueuse ayant ruisselé sur les produits et les plateaux 10 supports de produits qui sont empilés pour constituer une pluralité de piles 9 de plateaux alignés ou juxtaposés le long de l'axe 5 du convoyeur 4, et posés sur le brin supérieur 8 de celui-ci.

Le sens de déplacement des piles 9 de plateau 10 portant les produits à traiter, s'effectue de la gauche vers la droite par référence à la figure 1 ; à l'extrémité droite du convoyeur 4 est prévu un dispositif 16 de déchargement ou désempilage des plateaux en vue de leur transfert sur une table 13 de transfert, un par un, à la suite de quoi les plateaux 10 peuvent être transférés par un vérin 14 de transfert sur un deuxième convoyeur 15 à bande parallèle par exemple audit premier convoyeur 4, sur lequel deuxième convoyeur, les produits disposés sur les plateaux 10 pourront être rincés et ressuyés avant d'être transférés à un troisième convoyeur 18, susceptible de déplacer les plateaux à l'intérieur d'un tunnel 17 de fumage des produits.

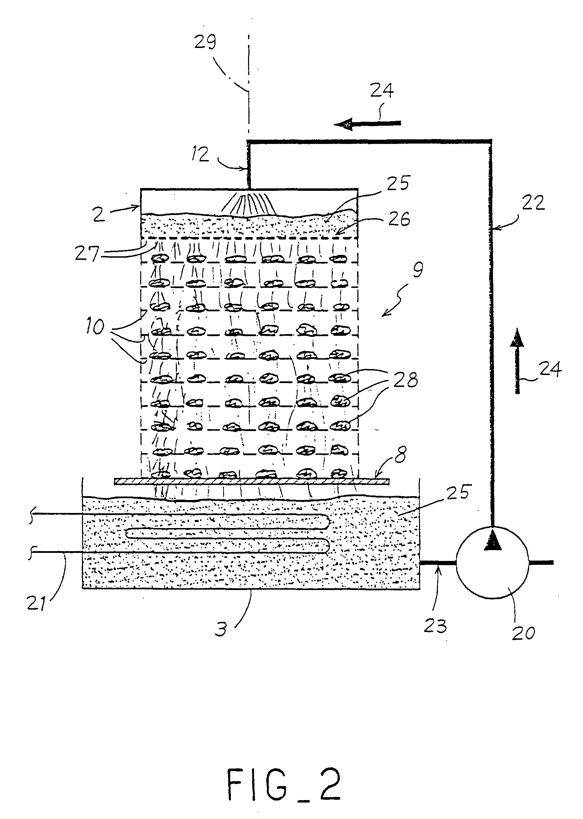

Par référence à la figure 2 particulièrement, l'installation de douchage des produits 28 disposés sur les plateaux 10 empilés et disposés sur le brin 8 du convoyeur (partiellement représenté), comporte ledit bac 3 de récupération situé sous le convoyeur et par conséquent sous les piles de plateaux 10, et comporte ledit bac 2 de distribution ou d'aspersion des piles de plateaux portant les produits, par une solution acqueuse 25.

Le bac 2 de distribution est muni d'un fond 26 dans lequel sont prévus une pluralité d'orifices ou perforations 27 permettant un écoulement gravitaire homogène de la solution acqueuse 25 délivrée dans le bac 2 par une canalisation 12 de distribution.

Après ruissellement sur les produits et les plateaux supports de produits de la solution 25 selon un mouvement vertical descendant, la solution 25 est récupérée dans le bac 3 qui est éventuellement muni d'un organe 21 tel qu'un serpentin permettant le maintien de la solution acqueuse 25 à une température par exemple voisine de 10 °C.

Une canalisation 23 d'aspiration raccordée au bac de récupération permet à une pompe 20 de circulation d'aspirer la solution présente dans le bac 3 et de la refouler selon les flèches 24 dans la canalisation 22 de refoulement débouchant dans les canalisations 12 de distribution de la solution acqueuse au bac 2 d'aspersion.

Par référence aux figures 2 à 5, les produits à traiter 28, tels que des filets de poissons par exemple, sont disposés dans des gorges 38 en forme de gouttières formant des logements recevant chacune une ou plusieurs pièces.

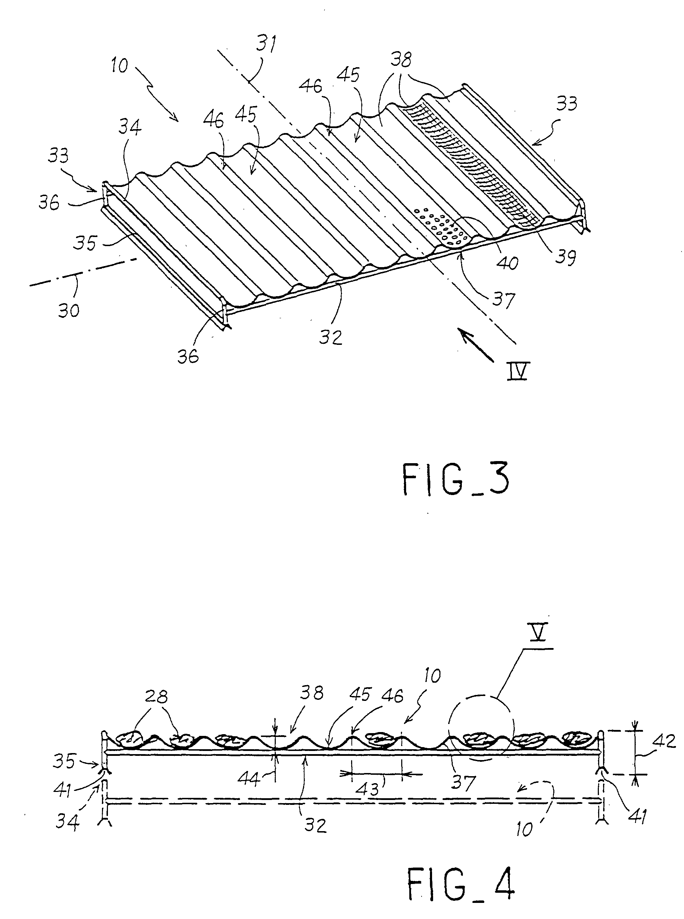

Par référence à la figure 3, les gorges 38 destinées à recevoir les produits sont en forme de portion de cylindres d'axes parallèles à un axe 31 transversal du plateau 10.

Les gorges 38 sont formées dans le support 37 de produits, par exemple une tôle ou un grillage 39.

Ce support ondulé 37-39 est muni d'une pluralité d'orifices 40 permettant l'écoulement de la solution acqueuse au travers du support 37, et par conséquent au travers des plateaux 10.

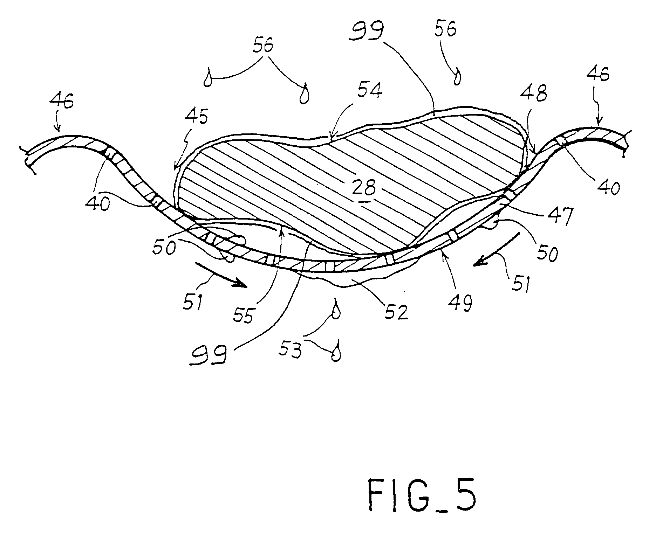

Chaque ondulation du support 37 comporte une partie en creux 45 formant lesdites gorges 38, deux parties successives 45 en creux étant raccordées par une partie 46 en saillie comme illustré particulièrement figures 4 et 5.

Le plateau 10 comporte, outre le support 37 ondulé perforé, des longerons 32 s'étendant parallèlement à l'axe longitudinal 30, qui relient des cadres 33 d'extrémité de forme sensiblement rectangulaire ; chaque cadre 33 est constitué d'une traverse horizontale supérieure 34 parallèle à l'axe 31, d'une traverse horizontale inférieure 35, lesquelles traverses 34 et 35 sont reliées par des bras verticaux de liaison 36.

Comme illustré particulièrement figure 4, les traverses inférieures 35 des cadres 33 d'extrémité sont chacune munie dans leur partie inférieure d'une gorge 41 apte à coopérer avec (c'est-à-dire à s'emboîter sur) la traverse supérieure 34 du plateau 10 (représenté en traits mixtes sur la figure 4) disposée sous le plateau considéré, pour faciliter le positionnement et le maintien des plateaux empilés les uns sur les autres pour constituer les piles 9 de plateaux disposées sur le convoyeur.

Par référence à la figure 4 particulièrement, la hauteur 42 des plateaux est de préférence inférieure ou égale à une dizaine de centimètres, la hauteur 44 des ondulations formées dans le support 37 de produit étant inférieure à la hauteur 42 des plateaux ; les ondulations 38 formées dans le support 37 sont de préférence identiques et espacées d'un pas constant 43 supérieur à la hauteur 44 des ondulations.

Par référence à la figure 5 particulièrement, on voit que des gouttes 56 incidentes (qui, compte tenu de l'important débit d'aspersion, forment un filet de solution) tombant par gravité sur le plateau contenant un produit à traiter 28 logé dans la partie en creux 45 d'une ondulation, peuvent asperger de manière homogène la face supérieure 54 du produit 28 et former un film de la solution qui recouvre lé produit ; lesdites gouttes incidentes 56 ruissellent sur la face supérieure 48 de la paroi 47 du support 37 pour former des gouttes 50 (ou film de solution) qui sont ainsi mises en contact avec la face inférieure 55 du produit reposant dans la gouttière ou ondulation 45 et favorisent ainsi le traitement de ce produit par sa face inférieure ; on obtient aussi un film 99 continu de solution tout autour du produit 28.

Des gouttes 50 formant un film ruissellent également dans la direction repérée par les flèches 51 sur la face 49 inférieure de la paroi 47, après leur passage au travers de celle-ci par les orifices 40, pour former en partie centrale inférieure de la partie en creux 45, un film de solution acqueuse 52 qui au fur et à mesure de son accumulation provoque la formation d'un jet ou filet de gouttes 53, qui tombent et ruissellent sur le produit disposé sur le plateau situé immédiatement en dessous, dans une partie en creux d'une ondulation qui est alignée verticalement avec celle représentée sur la figure 5, ce qui favorise également le traitement homogène des produits de la pile.

### Exemple 1 :

### Poisson bleu avec une saumure mixte sel/sirop de glucose.

- Caractéristiques initiales du produit :
   filets de hareng sans peau, provenant de blocs congelés et décongelés 12 heures à 10°C.
   . Masse 30 g environ,
   . Teneur en graisse initiale : 8 %-16 %
   . Teneur en eau initiale : 64-72 %
- Conditions de traitement :
   . Température de la saumure (solution acqueuse de traitement) 10°C,
   . Durée du douchage : 2 heures,
   . Concentration en sel de la saumure : 350 g/l d'eau,
   . Concentration en sirop de glucose (DE21) de la saumure : 500g/l d'eau,
   . Largeur de la maille du treillis des plateaux : 1 cm,
   . Largeur (pas) des ondulations du plateau : 40 mm,
   . Longueur des grilles (plateaux) : 400 mm,
   . Largeur des grilles (plateaux) : 300 mm,
   . Nombre de grilles : 20,
   . Volume de saumure : 80 litres,
   . Masse totale de harengs traités : 12 kg,
   . Débit de saumure : 1,5 m3/h.
- Caractéristiques moyennes des produits obtenus
   . teneur en eau = 62-63% (g/100g de matière finale)
   . teneur en sel = 5-6 (g/100g de matière finale).

Les produits sont alors égouttés et rincés. Ils peuvent être fumés. Une analyse organoleptique des produits ainsi traités démontre que leur qualité est comparable à celle des produits traités classiquement (salage par immersion, séchage à l'air et fumage).

### Exemple 2 :

### Poisson gras traité par une solution mixte sel/saccharose.

- Caractéristiques initiales du produit :
   filets de saumon avec peau. Les saumons ont été abattus depuis moins de 6 jours et sont conservés dans la glace.
   . Longueur 46 cm,
   . Largeur 16 cm,
   . Epaisseur 3 cm
   . Masse 1100 g environ,
   . Teneur en graisse initiale : 17 %-19 %
   . Teneur en eau initiale : 61-63 %
- Conditions de traitement :
   . Température de la saumure : 10°C,
   . Durée du douchage : 9 heures,
   . Concentration en sel de la saumure : 350 g/l d'eau,
   . Concentration en saccharose de la saumure : 440g/l d'eau,
   . Largeur de la maille : 1 cm,
   . Largeur des ondulations : 200 mm,
   . Longueur des grilles : 1000 mm,
   . Largeur des grilles : 500 mm,
   . Nombre de grilles : 5,
   . Volume de saumure : 50 litres,
   . Masse de saumons : 22 kg,
   . Débit de saumure : 3 m3/h.
- Caractéristiques moyennes des produits obtenus :
   . teneur en eau = 56-58% (g/100g de matière finale)
   . teneur en sel = 2,5-2,7% (g/100g de matière finale).

Les produits sont alors égouttés et rincés. Ils peuvent être fumés. La queue peut être masquée. Le douchage sera ainsi localisé sur la partie épaisse et grasse du filet et permettra d'améliorer l'homogénéité du traitement.

### Exemple 3 :

### Petit poisson bleu traité par une solution sel/sirop de glucose/acide acétique.

- Caractéristiques initiales du produit :
   filets d'anchois type butterfly, avec peau. Les anchois proviennent de blocs congelés et sont décongelés 12 heures à 10°C avant traitement.
   . Longueur 13 cm
   . Largeur 2,5 cm
   . Epaisseur 2 mm
   . Masse 9 g environ,
   . Teneur en graisse initiale : 3 %-8 %
   . Teneur en eau initiale : 71-76 %
- Conditions de traitement :
   . Température de la saumure : 10°C,
   . Durée du douchage : 20 mn,
   . Concentration en acide acétique de la saumure : 60g/l d'eau,
   . Concentration en sel de la saumure : 123 g/l d'eau,
   . Concentration en sirop de glucose (DE21) de la saumure : 100g/l d'eau,
   . Largeur des ondulations : 40 mm,
   . Longueur des grilles : 400 mm,
   . Largeur des grilles : 300 mm,
   . Nombre de grilles : 20,
   . Volume de saumure : 80 litres,
   . Masse d'anchois : 5 kg,
   . Débit de saumure : 1,5 m3/h.
- Caractéristiques moyennes des produits obtenus :
   . teneur en eau = 67-72% (g/100g de matière finale)
   . teneur en sel = 2,5-2,9 (g/100g de matière finale)
   . teneur en acide = 0,9%-1,1% (g/100g de matière finale)
   . PH = 4,45.

### Exemple 4 :

### Petit poisson bleu traité par une solution sel/sirop de glucose/acide citrique.

- Caractéristiques initiales du produit :
   filets de sardines, avec peau. Il s'agit de matière première fraîche péchée la veille du traitement et conservée dans la glace.
   . Longueur 15 cm
   . Largeur 2,5 cm
   . Epaisseur 3 mm
   . Masse 15 g environ,
   . Teneur en graisse initiale : 4 %-10 %
   . Teneur en eau initiale : 69-65 %
- Conditions de traitement :
   . Température de la saumure : 10°C,
   . Durée du douchage : 60 mn,
   . Concentration en acide citrique de la saumure : 60g/l d'eau,
   . Concentration en sel de la saumure : 123 g/l d'eau,
   . Concentration en sirop de glucose (DE21) de la saumure : 100g/l d'eau,
   . Largeur des ondulations : 40 mm,
   . Longueur des grilles : 400 mm,
   . Largeur des grilles : 300 mm,
   . Nombre de grilles : 20,
   . Volume de saumure : 80 litres,
   . Masse totale de harengs traités : 12 kg,
   . Débit de saumure : 1,5 m3/h.
- Caractéristiques moyennes des produits obtenus :
   . teneur en eau = 67-71% (g/100g de matière finale)
   . . teneur en sel = 2,1-2,5 (g/100g de matière finale)
   . teneur en acide = 0,9 %-1,1% (g/100g de matière finale)
   . pH = 4,03.

### Exemple 5 :

### Petit poisson bleu traité par une solution sel/sirop de glucose/acide acétique.

- Caractéristiques initiales du produit :
   filets de sardines, avec peau. Il s'agit de matière première fraîche péchée la veille du traitement et conservée dans la glace.
   . Longueur 15 cm
   . Largeur 2,5 cm
   . Epaisseur 3 mm
   . Masse 15 g environ,
   . Teneur en graisse initiale : 4 %-10 %
   . Teneur en eau initiale : 69-65 %-
- Conditions de traitement :
   . Température de la saumure : 10°C,
   . Durée du douchage : 70 mn,
   . Concentration en acide acétique de la saumure : 60g/l d'eau,
   . Concentration en sel de la saumure : 123 g/l d'eau,
   . Concentration en sirop de glucose (DE21) de la saumure : 100g/l d'eau,
   . Largeur des ondulations : 40 mm,
   . Longueur des grilles : 400 mm,
   . Largeur des grilles : 300 mm,
   . Nombre de grilles : 20,
   . Volume de saumure : 80 litres,
   . Masse totale de harengs traités : 12 kg,
   . Débit de saumure : 1,5 m3/h.
- Caractéristiques moyennes des produits obtenus :
   . teneur en eau = 61-67% (g/100g de matière finale)
   . teneur en sel = 2,5-3,0 (g/100g de matière finale)
   . teneur en acide = 0,9 %-1,1% (g/100g de matière finale)
   . pH = 4,38.

Les produits obtenus diffèrent sensiblement des produits marinés classiques. Ils sont moins acides et moins déshydratés. Les temps de traitement sont également considérablement réduits. En effet, les produits "du commerce" sont traités en une dizaine d'heures, alors que les produits présentés dans les exemples 3, 4 et 5 nécessitent des durées de traitement inférieures à 70 minutes.

## Revendications

1. Procédé de traitement de produits alimentaires carnés, par mise en contact des produits avec une solution aqueuse pour déshydrater ou imprégner lesdits produits, dans lequel :
- on dispose les produits alimentaires sur des supports perforés,
- on empile les supports,
- on douche lesdits produits par ladite solution aqueuse,
- on collecte sous la pile de supports, ladite solution aqueuse aspergée après son ruissellement sur les produits disposés sur les supports empilés,
- on recycle ladite solution aqueuse,
procédé **caractérisé en ce que** ladite solution aqueuse contient un (ou des) soluté(s) tel(s) que du sucre et/ou du sel et/ou un ou plusieurs acide(s), dont on ajuste la concentration, **en ce que** lesdits supports perforés comportent une structure perforée (37, 39) ondulée recevant lesdits produits

2. Procédé selon la revendication 1 dans lequel on utilise des claies ondulées que l'on dispose empilées sur un convoyeur.

3. Procédé selon l'une quelconque des revendications 1 à 2 dans lequel :
- on utilise une solution aqueuse dont la concentration en acide(s) est comprise entre 20 grammes par litre d'eau et 200 grammes par litre d'eau,
- on utilise une solution aqueuse dont la concentration en chlorure de sodium est supérieure ou égale à 50 g de sel par litre d'eau,
- on utilise une solution aqueuse dans laquelle la concentration du sucre ou du sirop de sucre est supérieure ou égale à 50 g de sucre ou de sirop de sucre par litre d'eau,
- on maintient le rapport du débit volumique aspergé à la surface des plateaux dans une plage allant de 1 à 50 m³ par heure et par m²,
- on fait circuler dans l'installation de traitement, un volume de ladite solution aqueuse dont le rapport à la masse de produits alimentaires traités est inférieure ou égale à 50 litres par kilo.

4. Dispositif (1) de traitement de produits (28) alimentaires carnés par aspersion des produits par une solution aqueuse (25), qui comporte :
- plusieurs supports (10) perforés superposés,
- des moyens (2, 26, 27) d'aspersion desdits produits disposés sur lesdits supports,
- des moyens (3) de collecte de ladite solution aqueuse,
- des moyens (20, 22, 23, 12) de recyclage de ladite solution aqueuse,
**caractérisé en ce que** les moyens de recyclage permettent d'ajuster la concentration du ou des soluté(s) contenu(s) dans la solution aqueuse, et **en ce que** lesdits supports perforés comportent une structure perforée (37, 39) ondulée recevant lesdits produits

5. Dispositif selon la revendication 4 qui comporte en outre des moyens (4) de déplacement d'une ou plusieurs piles (9) desdits supports.

6. Dispositif selon l'une quelconque des revendications 4 ou 5 dans lequel ladite structure (37, 39) ondulée comporte un treillis (39).

7. Dispositif selon l'une quelconque des revendications 4 à 6 dans lequel lesdits supports sont des plateaux identiques qui comportent chacun un treillis (39) ou grillage de fil métallique qui forme des ondulations en forme de canaux parallèles constituant des logements aptes à recevoir lesdits produits.

8. Dispositif selon l'une quelconque des revendications 4 à 7 dans lequel la hauteur (42) desdits supports ou plateaux est inférieure ou égale à 10 cm, et de préférence ladite hauteur est telle que son rapport à la hauteur (44) desdites ondulations de la partie du plateau formant support des produits est inférieur à 3.

9. Dispositif selon l'une quelconque des revendications 4 à 8 dans lequel lesdits supports ou plateaux comportent une ossature (32, 33) métallique de forme carrée ou rectangulaire.

10. Dispositif selon l'une quelconque des revendications 4 à 9, qui comporte un convoyeur (4) linéaire, un bac (2) de distribution de la solution aqueuse qui s'étend sur une partie substantielle de la longueur dudit convoyeur, un bac (3) de récupération qui s'étend sous ledit convoyeur sur une partie substantielle de la longueur de celui-ci, et dans lequel le rapport de la longueur (60) dudit convoyeur à la longueur (61) desdits plateaux est de préférence supérieur ou égal à 3, pour permettre de traiter et d'asperger plusieurs piles (9) de plateaux (10), lequel bac (2) de distribution est le cas échéant cloisonné et/ou en partie masqué pour permettre d'affecter à chaque compartiment de ce bac, par exemple des débits de solution différents.

## Patentansprüche

1. Verfahren zum Behandeln von Fleischwaren, bei dem die Lebensmittel mit einer wässrigen Lösung zum Entwässern oder Tränken der Lebensmittel in Berührung gebracht werden und bei dem:
- die Lebensmittel auf perforierten Trägern angeordnet werden,
- die Träger übereinander gestapelt werden,
- die Lebensmittel mit der wässrigen Lösung besprüht werden,
- die versprühte wässrige Lösung nach dem Berieseln der auf den übereinander gestapelten Trägern angeordneten Lebensmittel unter dem Trägerstapel gesammelt wird,
- die wässrige Lösung wiederverwendet wird,
**dadurch gekennzeichnet, dass** die wässrige Lösung einen gelösten Stoff (oder gelöste Stoffe) wie Zucker und/oder Salz und/oder eine oder mehrere Säuren enthält, deren Konzentration angepasst wird, dass die perforierten Träger eine wellenförmige, perforierte Struktur (37, 38) zum Aufnehmen der Lebensmittel aufweisen.

2. Verfahren nach Anspruch 1,
bei dem wellenförmige Siebe verwendet werden, die übereinander gestapelt auf einer Fördereinrichtung angeordnet sind.

3. Verfahren nach einem der Ansprüche 1 bis 2,
bei dem:
- eine wässrige Lösung verwendet wird, bei der die Säurekonzentration zwischen 20 g pro Liter Wasser und 200 g pro Liter Wasser liegt,
- eine wässrige Lösung verwendet wird, bei der die Natriumchloridkonzentration größer oder gleich 50 g Salz pro Liter Wasser ist,
- eine wässrige Lösung verwendet wird, bei der die Zucker- oder Zuckersirupkonzentration größer oder gleich 50 g Zucker oder Zuckersirup pro Liter Wasser ist,
- das Verhältnis des auf die Oberfläche der Platten in einem Bereich von 1 bis 50 m³ pro Stunde und m² aufgesprühten Volumendurchflusses bestehen bleibt,
- man in der Behandlungsanlage ein Volumen der wässrigen Lösung zirkulieren lässt, dessen Verhältnis zur Masse der behandelten Lebensmittel kleiner oder gleich 50 Liter pro Kilogramm ist.

4. Vorrichtung (1) zum Behandeln von Fleischwaren (28) durch Besprühen der Lebensmittel mit einer wässrigen Lösung (25), umfassend:
- mehrere übereinander liegende, perforierte Träger (10),
- Mittel (2, 26, 27) zum Besprühen der auf den Trägern angeordneten Lebensmittel,
- Mittel (3) zum Sammeln der wässrigen Lösung,
- Mittel (20, 22, 23, 12) zur Wiederverwendung der wässrigen Lösung,
**dadurch gekennzeichnet, dass** es die Mittel zur Wiederverwendung erlauben, die Konzentration des oder der gelösten Stoffe in der wässrigen Lösung anzupassen, und dass die perforierten Träger eine wellenförmige, perforierte Struktur (37, 39) zum Aufnehmen der Lebensmittel aufweisen.

5. Vorrichtung nach Anspruch 4,
die ferner Mittel (4) zum Verschieben eines oder mehrerer Stapel (9) Träger umfasst.

6. Vorrichtung nach einem der Ansprüche 4 oder 5,
bei der die wellenförmige Struktur (37, 39) ein Gitter (39) aufweist.

7. Vorrichtung nach einem der Ansprüche 4 bis 6,
bei der die Träger identische Platten sind, die jeweils ein Gitter (39) oder Gitterwerk aus Draht aufweisen, das wellenförmige Erhebungen in Form von parallelen Kanälen bildet, die zum Aufnehmen der Lebensmittel geeignete Ablagen bilden.

8. Vorrichtung nach einem der Ansprüche 4 bis 7,
bei der die Höhe (42) der Träger oder Platten kleiner oder gleich 10 cm ist, und die Höhe vorzugsweise derart ist, dass ihr Verhältnis zur Höhe (44) der wellenförmigen Erhebungen des den Träger für die Lebensmittel bildenden Plattenteils kleiner als 3 ist.

9. Vorrichtung nach einem der Ansprüche 4 bis 8,
bei der die Träger oder Platten eine quadratische oder rechteckige Tragkonstruktion (32, 33) aus Metall aufweisen.

10. Vorrichtung nach einem der Ansprüche 4 bis 9,
die eine geradlinige Fördereinrichtung (4), einen sich über einen wesentlichen Teil der Länge der Fördereinrichtung erstreckenden Behälter (2) zur Verteilung der wässrigen Lösung, einen sich unter der Fördereinrichtung über einen wesentlichen Teil deren Länge erstreckenden Behälter (3) zur Rückgewinnung umfasst, und bei der das Verhältnis der Länge (60) der Fördereinrichtung zur Länge (61) der Platten vorzugsweise größer oder gleich 3 ist, um das Behandeln und Besprühen mehrerer Stapel (9) Platten (10) zu ermöglichen, wobei der Verteilungsbehälter (2) gegebenenfalls durch Zwischenwände unterteilt und/oder teilweise abgedeckt ist, um jedem Abteil des Behälters zum Beispiel unterschiedliche Lösungsmengen zuzuteilen.

## Claims

1. A method of processing meat-containing food products by putting the products into contact with an aqueous solution for dehydrating or impregnating said products, in which method:
- the food products are placed on perforated supports;
- the supports are stacked;
- said products are sprinkled by said aqueous solution;
- said sprinkled aqueous solution is collected from beneath the stack of supports after it has run over the products placed on the stacked supports; and
- said aqueous solution is recycled;
the method being **characterized in that** said aqueous solution contains one or more solutes such as sugar and/or salt and/or one or more acids, with the concentration thereof being adjusted, and **in that** said perforated supports include respective corrugated perforated structures (37, 39) receiving said products.

2. A method according to claim 1, in which corrugated drip trays are used which are placed in a stack on a conveyor.

3. A method according to claim 1 or claim 2, in which:
- an aqueous solution is used having an acid concentration lying in the range 20 grams per liter of water to 200 grams per liter of water;
- an aqueous solution is used having a sodium chloride concentration greater than or equal to 50 grams of salt per liter of water;
- an aqueous solution is used in which the concentration of sugar or sugar syrup is greater than or equal to 50 grams of sugar or sugar syrup per liter of water;
- the ratio of sprinkled volume flow rate divided by the surface area of the trays is maintained in a range 1 to 50 cubic meters per hour and per square meter; and
- the volume of said aqueous solution that is caused to circulate in the treatment installation has a ratio to the mass of food products treated that is less than or equal to 50 liters per kilogram.

4. Apparatus (1) for treating meat-containing food products (28) by sprinkling the products with an aqueous solution (25), which apparatus comprises:
- a plurality of superposed perforated supports (10);
- means (2, 26, 27) for sprinkling said products disposed on said supports;
- means (3) for collecting said aqueous solution; and
- recycling means (20, 22, 23, 12) for recycling said aqueous solution;
the apparatus being **characterized in that** the recycling means enable the concentration of the solute(s) contained in the aqueous solution to be adjusted, and **in that** said perforated supports comprise a corrugated perforated structure (37, 39) receiving said products.

5. Apparatus according to claim 4, further comprising means (4) for moving one or more stacks (9) of said supports.

6. Apparatus according to claim 4 or claim 5, in which said corrugated structure (37, 39) includes a trellis (39).

7. Apparatus according to any one of claims 4 to 6, in which said supports are identical trays each comprising a metal wire trellis (39) or grid forming corrugations in the form of parallel channels constituting housings suitable for receiving said products.

8. Apparatus according to any one of claims 4 to 7, in which the height (42) of said supports or trays is less than or equal to 10 centimeters, and said height is preferably such that its ratio to the height (44) of said corrugations of the portion of the tray forming the support for the products is less than 3.

9. Apparatus according to any one of claims 4 to 8, in which each of said supports or trays includes a metal framework (32, 33) that is square or rectangular in shape.

10. Apparatus according to any one of claims 4 to 9, comprising a linear conveyor (4), an aqueous solution dispensing trough (2) extending over a substantial fraction of the length of said conveyor, a recovery trough (3) extending beneath said conveyor over a substantial fraction of its length, and in which the ratio of the length (60) of said conveyor over the length (61) of said trough is preferably greater than or equal to 3 so as to enable a plurality of stacks (9) of trays (10) to be treated and sprinkled, which distribution trough (2) is, where appropriate, partitioned, and/or partially masked in order to enable different flow rates of solution to be allocated to each compartment of the trough, for example.
